# EUROPEAN PATENT SPECIFICATION

(11) **EP 0 412 834 B1**
(45) Date of publication and mention of the grant of the patent: **16.02.1994**
(21) Application number: 90308814.4
(22) Date of filing: 10.08.1990
(51) Int. Cl.: B30B 15/30, B30B 11/00

(54) **Material supplying apparatus for a powder moulding machine**
Speisevorrichtung von pulverförmigen Material für eine Formpresse
Dispositif d'alimentation d'une presse mouleuse de poudre

(30) Priority: 10.08.1989 JP 205639/89
(43) Date of publication of application: 13.02.1991
(73) Proprietor: KABUSHIKI KAISHA MITSUISHI FUKAI TEKKOSHO, Bizen-shi, Okayama-ken (JP)
(72) Inventor: Nose, Norio, Okayama-shi, Okayama-ken (JP); Haguchi, Hiroshi, Okayama-shi, Okayama-ken (JP); Kawasaki, Kaoru, Oku-cho, Okayama-ken (JP)
(74) Representative: Davies, Christopher Robert

(56) References cited:
- DE-U- 8 714 762
- FR-A- 2 194 564
- FR-A- 2 624 485
- GB-A- 736 551
- US-A- 1 733 706
- US-A- 3 076 229
- US-A- 3 811 808

## Description

The present invention relates to a weight scaling type material supplying apparatus for a powder moulding machine for moulding, for instance, firebricks.

Methods of feeding a material into a moulding machine may be divided into two types, that is, weight scaling and volume measuring types.

A weight scaling type feeder comprising a scaling device 12 having a load cell 12a (shown in Fig. 9) is usually used with a pressing machine in a so-called "die movement truck system", in which a die 5 is moved by a truck. An example of a block moulding press using a weight scaling device can be found in FR-A-219564 which discloses a weighing container which is lowered over a moveable charger frame to transfer the material once it has been weighed, without material loss. The charger frame is then moved over the the die to deposit the material for pressing.

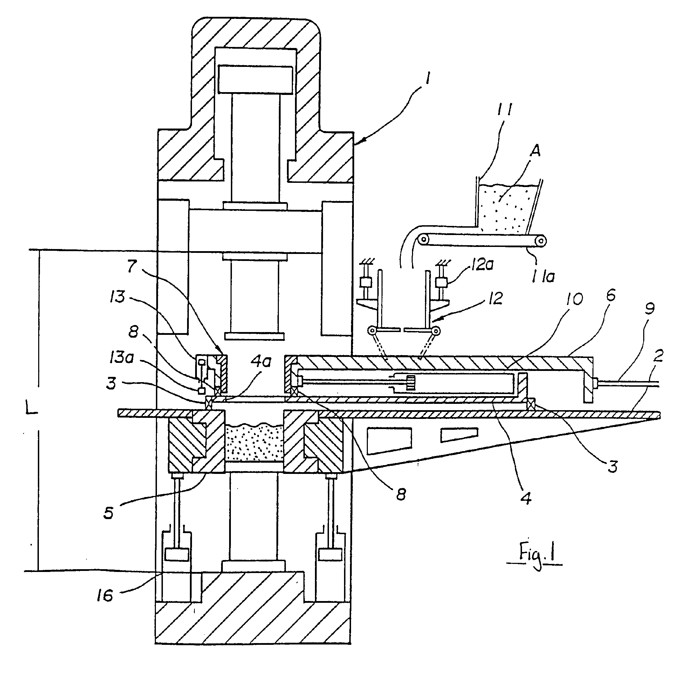

A volume measuring type feeder comprising a conveyer 11a, a hopper 11, a material inputting device 7A, and a cylinder 10 (see Fig. 10) is usually used with a pressing machine in a so-called "die floating type central moulding system", in which the die 5 is elevated by a floating cylinder 16 (Fig. 1).

The superiority and/or inferiority of the weight scaling apparatus compared with the volume measuring apparatus has yet to be decided, because both have advantages and disadvantages, and also because the moulding conditions can fluctuate largely depending on grain size, the composition of the powder material, and the kind of binder used, etc.

With respect to the above, the applicant has already proposed a volume measuring type of material supplying apparatus in which the possibility of the material separating into fine and coarse powder, or forming large clumps, can be reduced for any material, as can measuring errors.

In recent years, however, error conditions (tolerances) have become very severe and critical. For instance, in the case of a brick having a weight of 5 kg, the error (tolerance) in its thickness must be within a range of ± 0.2 mm and this value must be measured on the basis of a state in which the material is most densely packed.

In the conventional volume measuring technique, the weight of the firebrick can vary by more than 20 g, and, as the thickness of the brick is proportional to its weight, it is therefore very difficult to fulfil the above required thickness tolerances.

Even when the accuracy of the volume measuring technique is raised, there is a limitation, in that, the thickness of the bricks produced lie within a range of ± 0.5 to 1%. In other words, in the case of a brick weight of 5 kg, the error of its thickness dimension lies within a range of from 0.5 to 1 mm which is outside the tolerance levels detailed above. In addition, the above-mentioned conditions must be fulfilled in a state in which the material is most densely packed.

Therefore, in a case where a volume measuring type supplying apparatus is merely used, the above-mentioned severe and critical conditions and tolerances cannot be fulfilled. In other words, a weight scaling type supplying apparatus is needed in such a case.

In the case of forming a relatively small brick, and from the viewpoint of productivity, such a brick must be moulded efficiently. For this purpose, even if the scaling device 12 comprising the load cell 12a shown in Fig. 9 is applied to a volume type charger attached to, for example, the central moulding type pressing machine, a distance L (shown in Fig. 1) between the pressing devices, that is, an idle stroke, needs to be largely increased.

In consideration of the above-mentioned circumstances, there have conventionally been demanded techniques in which measuring errors in the weight can be made as small as possible, separation of fine and coarse powder and the formation of large clumps of material can be prevented, a drop height between an outlet of the material supply means and a die can be made as short as possible, a movement surface which comes into contact with the material can be made as small as possible (since a hard material such as a grinding material or the like which can damage the surface is frequently used as the moulded material), the amount of loss of material can be minimized, and a tapered surface can be preliminarily formed on a surface of the supplied material (because a moulded brick generally requires a tapered surface). In order to improve the productivity, it is desirable to utilize a pressing machine of the so-called "die floating central moulding type".

The present invention aims to fulfil the above-mentioned requirements and it is an object of the invention to provide a scaling type material supplying apparatus for a powder moulding machine in which weight errors (measuring errors in weight) of products can be reduced and the productivity can be improved.

According to the present invention, a weight scaling type material supplying apparatus for a powder moulding machine is provided, which comprises a weight scaling device having a material weighing means, a charger frame movable over a press table, a material inputting device provided on said charger frame for receiving a predetermined weight of material from said scaling device;
characterised in that said apparatus includes mixing means for mixing said material supplied to said material inputting device.

Thus, the invention provides an inputting device in which the accuracy of the weight of material input is high due to the use of a load cell and the composition of the material is made uniform by the mixing means. Preferably, the mixing means comprises a set of rotary blades attached to a vertical shaft of said apparatus for movement into and out of said material inputting device.

Further preferably, a shutter plate is provided between said material inputting device and said press table, and is actuable to open and close an outlet of said material inputting device when said inputting device is moved over a die of said moulding machine. By such an arrangement the material only contacts a small area of the shutter plate rather than a large area of the press table, and loss of material is kept to a minimum.

The shutter plate may be actuated by a piston and cylinder mounted between the shutter plate and the charger frame. Also, in order to ensure that a minimum of material is lost, a seal may be provided around the periphery of the shutter between the shutter and the press table.

Still further, a tapered surface forming means is preferably provided which forms a tapered surface on the material when the material has been supplied to the die from the inputting device and the charger frame has begun to move back from the die.

The tapered surface forming means may be mounted on the side of the inputting device closest to said die, and may comprise a horizontal rod mounted perpendicularly to the direction of movement of said charger frame on a piston, said rod being moved downwardly a set distance into said die when said charger frame begins to move back from said die, and being gradually withdrawn as said charger frame continues its movement so that a tapered surface is formed on the top surface of said material.

When a material is input (supplied) to the die, it is preferable to construct the apparatus in such a manner that a lower ram is relatively elevated in relation to the die in order to reduce a drop height of said material (inputting drop height), and thereafter, the lower ram is relatively lowered in relation to the die, so that the raw material is completely input (supplied) into the die.

According to the preferred scaling type material supplying apparatus of the present invention, after a material is supplied from the scaling device to the material inputting device, the material inputting device is moved forward by, for example, a piston and cylinder and stopped at a position just below the rotary blades. The material is then stirred by the rotary blades. Thus, the separation of the material into coarse and fine powder and the forming of large clumps of material is prevented, and the material is uniformly mixed. After this, the material inputting device is moved further forward to a position over the die, and the lower ram is relatively elevated in relation to the die. Then, the second cylinder, between the shutter and charger frame, is extended, causing the shutter frame to move backwardly and open the material inputting device, thereby inputting the material into the die at a small drop height. The lower ram is then lowered in relation to the die so that the material is completely input into the die. After this, the material inputting device is moved back from the die. The tapering bar is extended into the die at the start of this backward movement, and is gradually retracted upwards during the backward movement. A tapered surface which is upwardly inclined toward the backward direction is thus formed by the bar on the upper surface of the material in the die.

An embodiment of the present invention will now be described, by way of example only, with reference to the accompanying drawings, in which
Fig. 1 is a side sectional view of an embodiment of the present invention,
Fig. 2 is a plan view of the shutter plate and charger frame of Fig. 1,
Fig. 3 is a cross-sectional view taken along line I-I of Fig. 2 which also shows a die and lower ram of the moulding apparatus,
Fig. 4 to 8 are side-sectional views showing relevant parts of the apparatus in various operational stages, and
Fig. 9 and 10 show conventional apparatuses of the weight scaling and the volume measuring types, respectively.

Referring to Figs. 1 to 3, reference numeral 1 denotes a powder moulding machine of the die floating central moulding type for simultaneously moulding two bricks in parallel by a well-known technique.

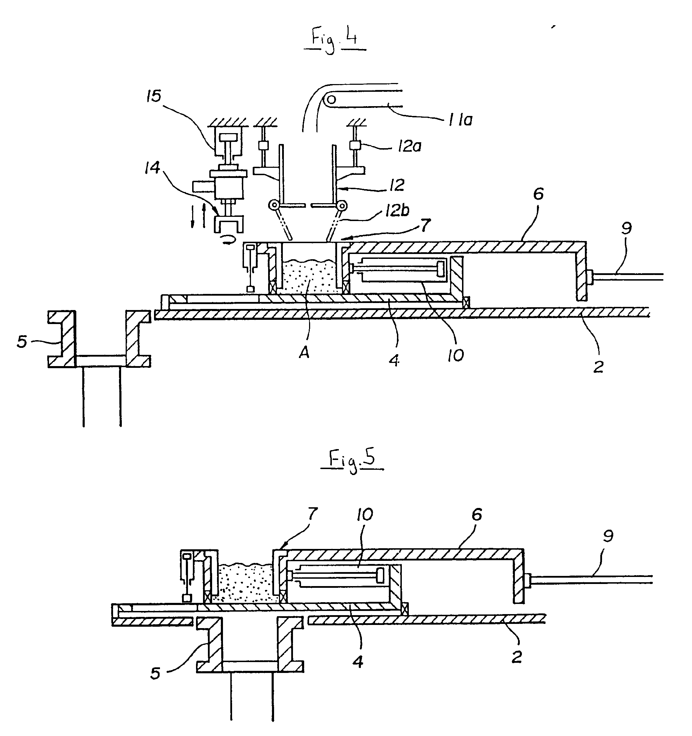

The die 5 is arranged so that it can be freely elevated by means of floating cylinders 16. A horizontal press table 2 is attached to the die 5. A shutter plate 4 having a dust seal 3 around its periphery is provided at a small height α of, for instance, 0.1 mm above the upper surface of the table 2 (see Fig. 3) so that the shutter plate 4 is slidable in the front/back directions (right/left directions in the drawings) of the apparatus. A pair of opening portions 4a, are formed in the shutter plate 4, and a material inputting device 7, which is in slidable contact with the shutter plate 4 through a dust seal 8, is provided so that it may face the opening portions 4a. A left end portion of a charger frame 6 which extends in the horizontal right direction is coupled to the raw material inputting device 7. A right end portion of the charger frame 6 is coupled to a hydraulic or pneumatic first cylinder 9. A hydraulic or pneumatic second cylinder 10 is interposed between the charge frame 6 and the shutter plate 4. A tapered surface forming cylinder 13 (as a tapered surface forming means) is provided on the front, die side, portion of the material inputting device 7. A horizontal bar 13a which extends perpendicularly to the direction of movement of the charger frame 6 is provided on the cylinder 13.

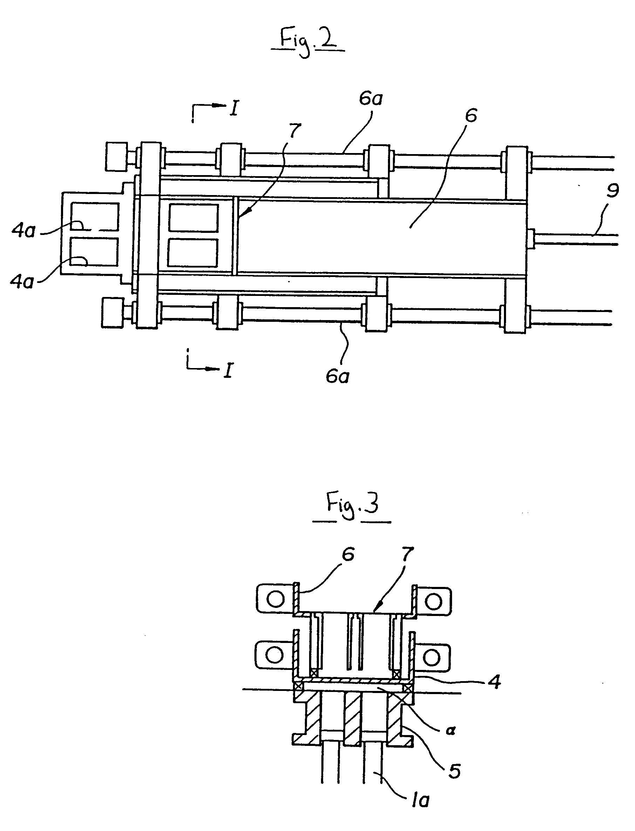

Reference numerals 6a in Fig. 2 denote guide bars for guiding the shutter plate 4 and the charger frame 6. In place of the guide bars 6a, a box-type guide could also be used, or the charger frame 6 could be attached to a roller type truck which rides over the shutter plate 4.

The scaling device 12 including the load cell 12a is arranged over the charger frame 6. A conveyer 11a for measuring and transporting material stored in the hopper 11 to the scaling device 12 is arranged over the scaling device 12, and, as shown in Fig. 4, a vertical rotary shaft stirring blade device 14, which is driven by a motor and is elevated by a hydraulic or pneumatic cylinder 15, is arranged between the scaling device 12 and the die 5. The inner surface of the hopper 11 has a structure such that none of the powder material deposits on it.

Upon operation, a material A, which is measured and supplied from the material hopper 11 and conveyed by the conveyer 11a, is scaled to a value having an accuracy of within a range of, for instance, ± 10 g, by means of the load cell 12a of the scaling device 12.

Next, as shown in Fig. 4, the cylinder 9 is contracted into a state in which the cylinder 10 is also contracted. Thus, the charger frame 6 is moved backwardly, and the material inputting device 7 faces the scaling device 12. Then, the shutter 12b is opened and the material A is supplied to the material inputting device 7.

Next, the cylinder 9 is extended, and the material inputting device 7 is moved forward from the position shown in Fig. 4 until it stops at a position under the blade device 14. Then, the cylinder 15 is extended, the blade device 14 descends, the material A is stirred, and the separation of the material into fine and coarse powder and the formation of large clumps of material is prevented, thereby uniformly mixing the material A.

When the cylinder 15 is contracted and the blade device 14 is lifted up to its original position, the cylinder 9 is further extended, the charger frame 6 is forwardly moved, and the material inputting device 7 is stopped in a position over the die 5 as shown in Fig.5.

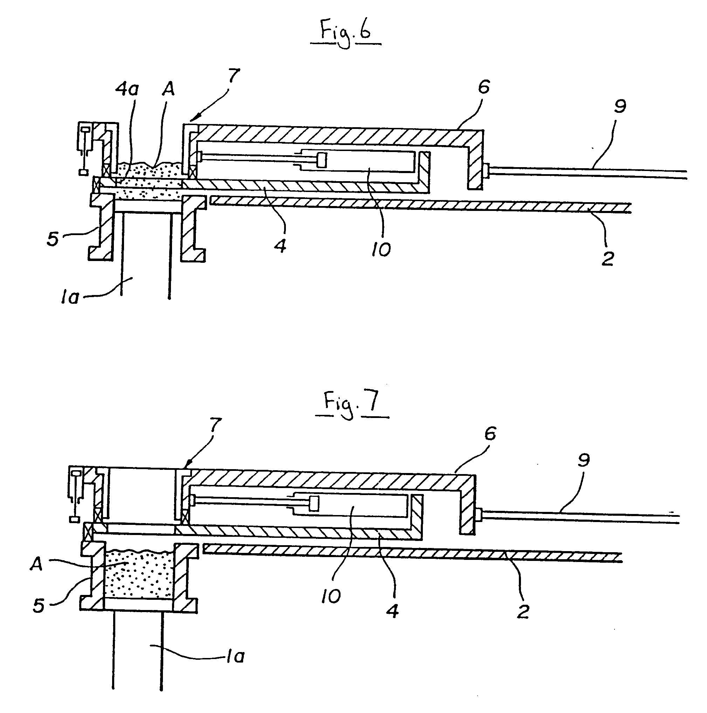

Subsequently, as shown in Fig. 6, the floating cylinders 16 are contracted, the die 5 is lowered, and a lower ram 1a of the powder moulding machine 1 is lifted up in relation to the die 5 until it reaches a position near the shutter plate 4. Then, the cylinder 10 is extended, the shutter plate 4 is moved back, the opening portions 4a face the material inputting device 7, and the material A is input (supplied) to the die 5.

Therefore, the drop height upon input of the material A is very small, and an area of the frame 6 with which the material A comes into contact (the movement contact area of the material A) is small. In this embodiment, the movement contact area of the material A is an area of the shutter frame 4 which faces the material inputting device 7. Thus, abrasion of the machine's components by the material A, and spill of the material A, is minimized.

Next, as shown in Fig. 7, the floating cylinders 16 are extended, the die 5 is raised, the lower ram 1a descends in relation to the die 5, and the material A is completely supplied into the die 5.

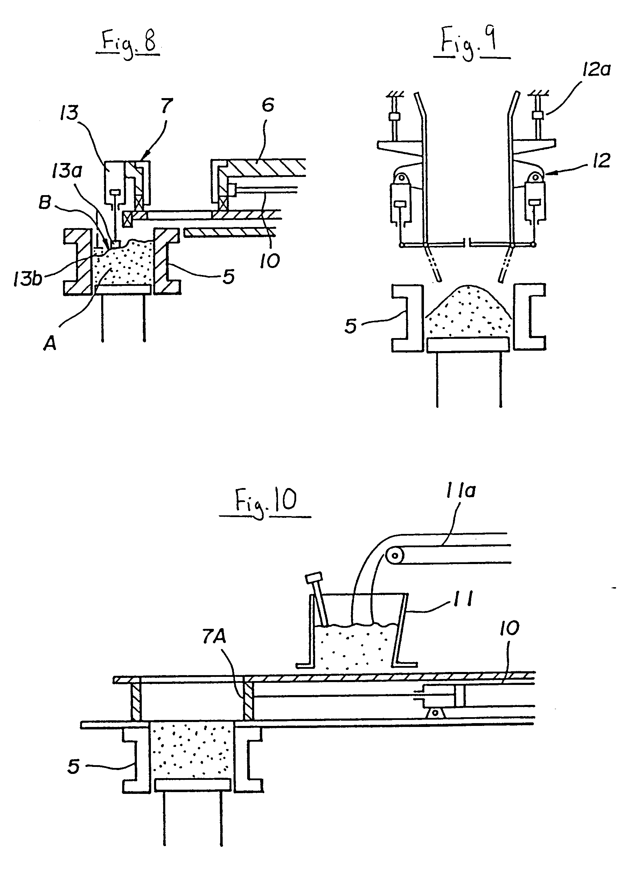

From this position, the cylinder 9 is contracted and the charger frame 6 starts to move back from the die 5, as shown in Fig. 8. At this point, the cylinder 13 is extended, and the horizontal bar 13a descends to a position 13b indicated by the broken line in Fig.8. The piston of cylinder 13 is sequentially retracted during the backward movement of the charger frame 6, and a tapered surface B which is upwardly backwardly inclined is formed on the surface of the material A in the die 5 by the horizontal bar 13a.

Since the present invention has been constructed as described above, the scaling accuracy is improved, the spill of the material is minimized, the material in the material inputting device is uniformly mixed, the material is input (supplied) into the die at a minimum drop height, the weight tolerance error of the products can be minimized, clean surroundings are obtained, and productivity can be improved.

## Claims

1. Weight scaling material supplying apparatus for a powder moulding machine (1) comprising a weight scaling device (12) having a material weighing means, a charger frame (6) movable over a press table (2), a material inputting device (7) provided on said charger frame for receiving a predetermined weight of material from said scaling device;
characterised in that said apparatus includes mixing means (14) for mixing said material supplied to said material inputting device.

2. Weight scaling material supplying apparatus according to claim 1, wherein said mixing means (14) comprises a set of rotary blades attached to a vertical shaft of said apparatus for movement into and out of said material inputting device.

3. Weight scaling material supplying apparatus according to claim 1 or 2, wherein a shutter plate (4) is provided between said material inputting device (7) and said press table (2), and is actuable to open and close an outlet of said material inputting device when said inputting device is moved over a die (5) of said moulding machine.

4. Weight scaling material supplying apparatus according to claim 3, wherein said shutter plate (4) is actuated by a piston and cylinder (10) mounted between said shutter plate and said charger frame.

5. Weight scaling material supplying apparatus according to claim 3 or 4, wherein a seal (3) is provided around the periphery of the shutter (4) between the shutter and the press table (2).

6. Weight scaling material supplying apparatus according to any preceding claim, wherein a tapered surface forming means (13) is provided for forming a tapered surface on said material (A) after said material has been supplied to a die (5) of said moulding machine.

7. Weight scaling material supplying apparatus according to claim 6, wherein said tapered surface forming means (13) is mounted on the side of said inputting device (7) closest to said die (5), and comprises a horizontal rod (13a) mounted perpendicularly to the direction of movement of said charger frame (6) on a piston, said rod being moved downwardly a set distance into said die when said charger frame begins to move back from said die, and being gradually withdrawn as said charger frame continues its movement so that a tapered surface is formed on the top surface of said material (A).

8. Weight scaling material supplying apparatus according to any preceding claim, wherein said press table houses (2) said die (5) and is vertically movable on a cylinder (16), said press table being lowered with respect to a press ram of said moulding machine when said material (A) is applied to said die, so that the material only falls a short distance when being fed into said die, and when said material has been supplied to said die, said press table is raised with respect to said ram so that the material is completely input into said die.

9. Weight scaling material supplying apparatus according to any preceding claim, wherein said charger frame (6) is moved by a cylinder (9).

10. Weight scaling material supplying apparatus according to any preceding claim, wherein said material weighing means comprises a load cell (12a).

## Patentansprüche

1. Gewichtsmessende Materialzuführungsvorrichtung für eine Pulverformungsmaschine (1), umfassend: eine Gewichtsmeßvorrichtung (12) mit einem Materialwiegemittel, einen über einen Preßtisch (2) beweglichen Laderrahmen (6), eine an dem Laderrahmen vorgesehene Materialeingabevorrichtung (7) zur Aufnahme eines vorbestimmten Materialgewichts von der Meßvorrichtung;
**dadurch gekennzeichnet**, daß die Vorrichtung ein Mischmittel (14) zum Mischen des der Materialeingabevorrichtung zugeführten Materials umfaßt.

2. Gewichtsmessende Materialzuführungsvorrichtung nach Anspruch 1, in der das Mischmittel (14) einen Satz von Drehblättern umfaßt, die an einer vertikalen Welle der Vorrichtung zur Bewegung in und aus der Materialeingabevorrichtung angebracht sind.

3. Gewichtsmessende Materialzuführungsvorrichtung nach Anspruch 1 oder 2, in der eine Verschlußplatte (4) zwischen der Materialeingabevorrichtung (7) und dem Preßtisch (2) vorgesehen und betätigbar ist, um einen Auslaß der Materialeingabevorrichtung zu öffnen und zu schließen, wenn die Eingabevorrichtung über eine Form (5) der Formungsmaschine bewegt wird.

4. Gewichtsmessende Materialzuführungsvorrichtung nach Anspruch 3, in der die Verschlußplatte (4) durch einen Kolben und einen Zylinder (10) betätigt wird, der zwischen der Verschlußplatte und dem Laderrahmen angebracht ist.

5. Gewichtsmessende Materialzuführungsvorrichtung nach Anspruch 3 oder 4, in der eine Dichtung (3) um den Umfang des Verschlusses (4) zwischen dem Verschluß und dem Preßtisch (2) vorgesehen ist.

6. Gewichtsmessende Materialzuführungsvorrichtung nach einem der vorhergehenden Ansprüche, in der ein Schrägflächenbildungsmittel (13) vorgesehen ist, um eine Schrägfläche an dem Material (A) zu bilden, nachdem das Material einer Form (5) der Formungsmaschine zugeführt worden ist.

7. Gewichtsmessende Materialzuführungsvorrichtung nach Anspruch 6, in der das Schrägflächenbildungsmittel (13) an der der Form (5) nächsten Seite der Eingabevorrichtung (7) angebracht ist und eine horizontale Stange (13a) umfaßt, die orthogonal zur Bewegungsrichtung des Laderrahmens (6) an einem Kolben angebracht ist, welche Stange um einen vorbestimmten Abstand in die Form abwärts bewegt wird, wenn der Laderrahmen mit der Rückbewegung von der Form beginnt, und allmählich rückgezogen wird, wenn der Laderrahmen seine Bewegung fortführt, so daß sich auf der Deckfläche des Materials (A) eine Schrägfläche bildet.

8. Gewichtsmessende Materialzuführungsvorrichtung nach einem der vorhergehenden Ansprüche, in der der Preßtisch (2) die Form (5) aufnimmt und vertikal an einem Zylinder (16) beweglich ist, welcher Preßtisch bezüglich eines Preßstößels der Formungsmaschine abgesenkt wird, wenn das Material (A) der Form zugeführt wird, so daß das Material bei Zuführung in die Form nur um eine kurze Distanz fällt, und wenn das Material der Form zugeführt worden ist, der Preßtisch bezüglich des Stößels angehoben wird, so daß das Material vollständig in die Form eingegeben wird.

9. Gewichtsmessende Materialzuführungsvorrichtung nach einem der vorhergehenden Ansprüche, in der der Laderrahmen (6) durch einen Zylinder (9) bewegt ist.

10. Gewichtsmessende Materialzuführungsvorrichtung nach einem der vorhergehenden Ansprüche, in dem das Materialwiegemittel eine Ladekammer (12a) umfaßt.

## Revendications

1. Dispositif de fourniture de matière à dosage pondéral pour une machine de moulage de poudre (1) comprenant un appareil de dosage pondéral (12) ayant des moyens de pesage de la matière, un cadre de chargement (6) mobile au-dessus d'une table de presse (2), un appareil (7) d'introduction de matière prévu sur ledit cadre de chargement pour recevoir un poids prédéterminé de matière provenant dudit appareil de dosage;
caractérisé en ce que ledit dispositif comprend des moyens de mélange (14) pour mélanger ladite matière fournie audit appareil d'introduction de matière.

2. Dispositif de fourniture de matière à dosage pondéral suivant la revendication 1, dans lequel lesdits moyens de mélange (14) comprennent un jeu de pales tournantes attachées à un arbre vertical dudit dispositif pour entrer dans et sortir dudit appareil d'introduction de matière.

3. Dispositif de fourniture de matière à dosage pondéral suivant la revendication 1 ou 2, dans lequel il est prévu entre ledit appareil (7) d'introduction de matière et ladite table de presse (2) une plaque d'obturation (4) qui est manoeuvrable pour ouvrir et fermer une sortie dudit appareil d'introduction de matière lorsque ledit appareil d'introduction est déplacé au-dessus d'une matrice (5) de ladite machine de moulage.

4. Dispositif de fourniture de matière à dosage pondéral suivant la revendication 3, dans lequel ladite plaque d'obturation (4) est manoeuvrée par un piston et un cylindre (10) montés entre ladite plaque d'obturation et ledit cadre de chargement.

5. Dispositif de fourniture de matière à dosage pondéral suivant la revendication 3 ou 4, dans lequel il est prévu un joint d'étanchéité (3) autour de la périphérie de l'obturateur (4) entre l'obturateur et la table de presse (2).

6. Dispositif de fourniture de matière à dosage pondéral suivant l'une quelconque des revendications précédentes, dans lequel il est prévu des moyens (13) de formation d'une surface conique pour former une surface conique sur ladite matière (A) après que ladite matière ait été fournie à une matrice (5) de ladite machine de moulage.

7. Dispositif de fourniture de matière à dosage pondéral suivant la revendication 6, dans lequel lesdits moyens (13) de formation d'une surface conique sont montés sur le côté dudit appareil d'introduction (7) très près de ladite matrice (5), et comprennent une barre horizontale (13 a) monteé sur un piston perpendiculairement à la direction du mouvement dudit cadre de chargement (6), ladite barre étant déplacée de haut en bas sur une distance prédéterminée à l'intérieur de ladite matrice lorsque ledit cadre de chargement commence à s'écarter de ladite matrice, et étant progressivement retirée lorsque ledit cadre de chargement continue son mouvement de telle sorte qu'une surface conique est formée sur la surface supérieure de ladite matière (A).

8. Dispositif de fourniture de matière à dosage pondéral suivant l'une quelconque des revendications précédentes, dans lequel ladite table de presse (2) reçoit ladite matrice (5) et est mobile verticalement sur un cylindre (16), ladite table de presse étant abaissée par rapport à un poinçon de presse de ladite machine de moulage lorsque ladite matière (A) est fournie à ladite matrice, de telle sorte que la matière ne tombe que sur une courte distance lorsqu'elle est chargée dans ladite matrice, et lorsque ladite matière a été fournie à ladite matrice, ladite table de presse est relevée par rapport audit poinçon de telle sorte que la matière est complètement introduite dans ladite matrice.

9. Dispositif de fourniture de matière à dosage pondéral suivant l'une quelconque des revendications précédentes, dans lequel ledit cadre de chargement (6) est déplacé par un cylindre (9).

10. Dispositif de fourniture de matière à dosage pondéral suivant l'une quelconque des revendications précédentes, dans lequel lesdits moyens de pesage de la matière comprennent une cellule de charge (12a).
